# EUROPEAN PATENT APPLICATION

(11) **EP 0 896 163 A1**
(43) Date of publication of application: **10.02.1999**
(21) Application number: 98305018.8
(22) Date of filing: 25.06.1998
(51) Int. Cl.: F16C 33/10

(54) **Hydraulic dynamic bearing and spindle motor having the bearing and rotary assembly provided with the spindle motor**

(30) Priority: 05.08.1997 JP 211026/97
(71) Applicant: SEIKO INSTRUMENTS INC., Chiba-shi, Chiba 261 (JP)
(72) Inventor: Namiki, Hiroaki, Mihama-ku, Chiba-shi, Chiba (JP)
(74) Representative: Sturt, Clifford Mark

(57) **Abstract**

To realise a hydraulic dynamic pressure bearing (A) which is high in generation efficiency of a dynamic pressure, a spindle motor using the hydraulic dynamic pressure bearing (A) and a rotary assembly using the spindle motor, there are provided a thrust bearing movable member (1) and a thrust bearing fixed member (2) with a dynamic pressure generating groove (3) being formed on an overlap surface of the thrust bearing movable member (1) or an overlap surface of the thrust bearing fixed member (2). The dynamic pressure generating groove (3) is formed with a cross section such that it is gradually deepened on a side into which fluid is introduced in a longitudinal direction and a transverse direction of the groove (3), and is abruptly deepened on a side from which fluid is discharged in the longitudinal direction and the transverse direction of the groove (3) to thereby enhance the dynamic pressure generation efficiency.

## Description

The present invention relates to a hydraulic dynamic bearing having a dynamic pressure generating groove for enhancing a generation efficiency of a dynamic pressure, a spindle motor using this hydraulic dynamic pressure bearing and a rotary assembly using the spindle motor.

It is impossible to obtain a sufficient support force for the load because a generation efficiency of the dynamic pressure is low with a hydraulic dynamic pressure bearing used in a conventional spindle motor.

An object of the present invention is to provide a hydraulic dynamic pressure bearing in which the generation efficiency of dynamic pressure is high. It is also an objection of the invention to provide a spindle motor using the hydraulic dynamic pressure bearing and a rotary assembly using the spindle motor.

According to a first aspect of the invention, there is provided a hydraulic dynamic pressure bearing comprising a bearing movable member and a bearing fixed member, characterised in that a dynamic pressure generating groove formed in a sliding surface of either one of the above-described members is formed with a cross section such that the dynamic pressure generating groove is gradually deepened on a side into which fluid is introduced in a longitudinal direction of the groove and on a side into which fluid is introduced in a transverse direction of the groove, and abruptly deepened on a side from which fluid is discharged in the longitudinal direction of the groove and on a side from which fluid is discharged in the transverse direction of the groove.

In the case where the hydraulic dynamic pressure bearing is a thrust dynamic pressure bearing, a hydraulic dynamic pressure bearing comprises a first circular thrust bearing member; and a second circular thrust bearing member provided so as to slide relative to the first thrust bearing member; wherein a dynamic pressure generating groove is formed on a sliding surface of either one of the first thrust bearing member and the second thrust bearing member; wherein the groove is formed with a cross section such that the depth of the groove is gradually deepened on a side into which fluid is introduced in a longitudinal direction of the dynamic pressure generating groove and on a side into which fluid is introduced in a transverse direction of the dynamic pressure generating groove; and wherein the groove is formed with a cross section such that the depth of the groove is abruptly deepened on a side from which fluid is discharged in the longitudinal direction of the dynamic pressure generating groove and on a side from which fluid is discharged in a transverse direction of the dynamic pressure generating groove.

In the case where the hydraulic dynamic pressure bearing is a radial dynamic pressure bearing, a hydraulic dynamic pressure bearing comprises a column-like first radial bearing member, and a cylindrical second radial bearing member provided so as to slide relative to the first radial bearing member, wherein a dynamic pressure generating groove is formed on a sliding surface of either one of the first radial bearing member and the second radial bearing member; wherein the groove is formed with a cross section such that the depth of the groove is gradually deepened on a side into which fluid is introduced in a longitudinal direction of the dynamic pressure generating groove and on a side into which fluid is introduced in a transverse direction of the dynamic pressure generating groove; and wherein the groove is formed with a cross section such that the depth of the groove is abruptly deepened on a side from which fluid is discharged in the longitudinal direction of the dynamic pressure generating groove and on a side from which fluid is discharged in a transverse direction of the dynamic pressure generating groove.

Also, according to a second aspect of the invention, in a spindle motor comprising a spindle pivoted to a stationary member through the hydraulic dynamic pressure bearing, the hydraulic dynamic pressure bearing having the above-described structure is used.

Furthermore, according to a third aspect of the invention, there is provided a rotary assembly in which an object to be rotated, such as a polygon mirror, a magnetic disc or an optical disc, is mounted on the spindle of the spindle motor according to the second aspect of the invention.

Embodiments of the invention will now be described by way of further example only and with reference to the accompanying drawings in which:
Fig. 1A is a longitudinal sectional view showing a hydraulic dynamic pressure bearing in accordance with a first embodiment of a first aspect of the invention, Figs. 1B and 1C are illustrations of a dynamic pressure generating groove, Fig. 1D is an enlarged view showing the dynamic pressure generating groove, Fig. 1E is a cross-sectional view taken along the line e-e of Fig. 1D, and Fig. 1F is a cross-sectional view taken along the line f-f of Fig. 1D;
Fig. 2A is a longitudinal sectional view showing a hydraulic dynamic pressure bearing in accordance with a second embodiment of the first aspect of the invention, Fig. 2B is an illustration of a dynamic pressure generating groove, Fig. 2C is an enlarged view showing the dynamic pressure generating groove, Fig. 2D is a cross-sectional view taken along the line d-d of Fig. 2C, and Fig. 2E is a cross-sectional view taken along the line e-e of Fig. 2C;
Fig. 3 is a longitudinal sectional view showing a spindle motor using a hydraulic dynamic pressure bearing in accordance with a first embodiment of second aspect of the invention;
Fig. 4 is a longitudinal sectional view showing a spindle motor using a hydraulic dynamic pressure bearing in accordance with a second embodiment of the second aspect of the invention;
Fig. 5 is a longitudinal sectional view showing a rotary assembly using a spindle motor in accordance with a first embodiment of a third aspect of the invention; and
Fig. 6 is a perspective view showing a rotary assembly using a spindle motor according to a second embodiment of the third aspect of the invention.

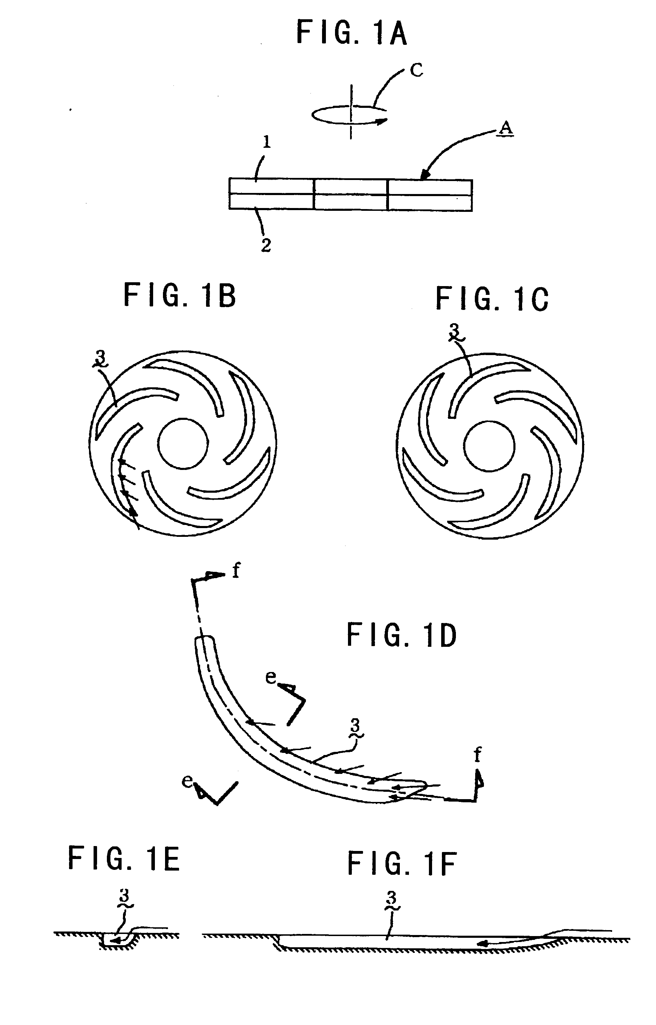

Figs. 1A, 1B and 1C are longitudinal sectional views showing a hydraulic dynamic pressure bearing in accordance with a first embodiment of the first aspect of the invention.

The hydraulic dynamic pressure bearing A is provided with a thrust bearing movable member 1 and a thrust bearing fixed member 2. This bearing may be used even if it is turned over. If the thrust bearing movable member 1 is rotated in a direction indicated by an arrow C in Fig. 1A, a dynamic pressure generating groove 3 is formed on a sliding surface of the thrust bearing movable member 1 as shown in Fig. 1B or is formed on a sliding surface of the thrust bearing fixed member 2 as shown in Fig. 1C.

When the thrust bearing movable member is rotated counter clockwise as shown in Fig. 1B, the fluid is introduced from the front side of the rotational direction to the dynamic pressure generating groove 3 and discharged in the rear side of the rotational direction. As shown in Figs. 1E and 1F, the dynamic pressure generating groove 3 is formed with a cross-section such that the depth on the inlet side of the fluid in the longitudinal direction and a transverse direction is gradually increased. Also, the depth on the outlet side of the fluid is formed with a cross-section such that it is abruptly deepened.

It is preferable that the dynamic pressure generating groove 3 is defined by an exponential spiral curved line. For example, it may be formed into a " < " shape. Even in this case, the dynamic pressure generating groove is formed in the same manner as described above.

When the thrust bearing movable member 1 is rotated in a direction indicated by the arrow C in Fig. 1A, air is introduced into the dynamic pressure generating groove 3 by the viscosity effect of the air. As a result, a pressure on the discharge side of the air of the dynamic pressure generating groove is increased so that a fine gap is generated between the thrust bearing movable member 1 and the thrust bearing fixed member 2. Thereby the thrust bearing movable member 1 floats relative to the fixed member 2. The thrust dynamic pressure bearing function works in this floated condition.

If the dynamic pressure generating groove 3 takes the above-described shape, the generation efficiency of the dynamic pressure is increased. Also, if the groove width on the inlet side of the fluid in the longitudinal direction of the dynamic pressure generating groove 3 is increased and the groove width on the outlet side thereof is narrowed, it is possible to further enhance the generation efficiency of the dynamic pressure.

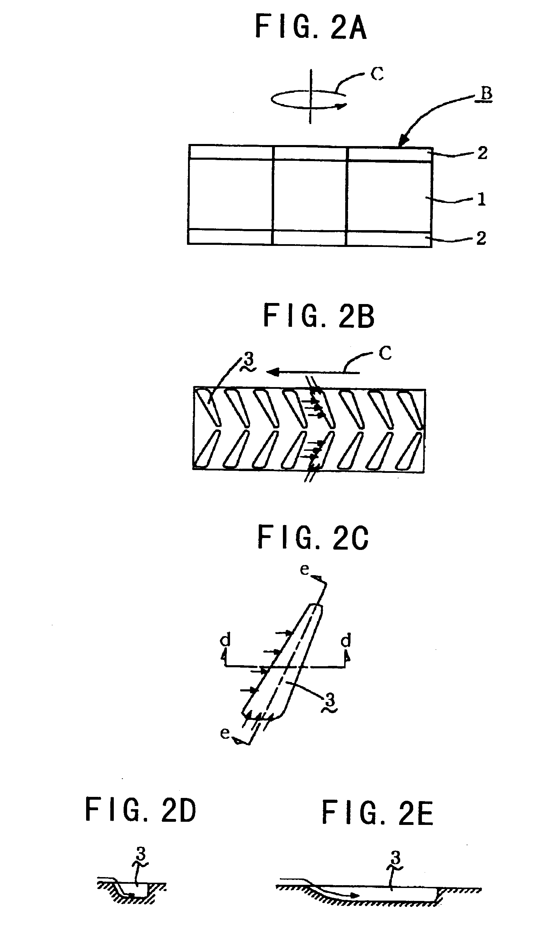

Figs. 2A to 2E are longitudinal sectional views showing a hydraulic dynamic pressure bearing in accordance with a second embodiment of the first aspect of the invention.

In this hydraulic dynamic pressure bearing B, a thrust bearing movable member 1 serving also as the radial bearing movable member is sandwiched by two thrust bearing fixed members 2. If the thrust bearing movable member 1 is rotated in the direction indicated by the arrow C in Fig. 2A, the dynamic pressure generating groove 3 is formed on an upper surface of the thrust bearing movable member 1 as shown in Fig. 1B or formed on a lower surface of the upper thrust bearing fixed member 2 as shown in Fig. 1C, and formed on a lower surface of the thrust bearing movable member 1 as shown in Fig. 1C or formed on a upper surface of the lower thrust bearing fixed member 2 as shown in Fig. 1B.

Also, in the second embodiment, in the same manner as in the first embodiment, as shown in Figs. 1D, 1E and 1F, if the dynamic pressure generating groove 3 is formed with a cross-section such that the depth on the inlet side of the fluid in the longitudinal direction and the transverse direction of the dynamic pressure generating groove 3 is increased gradually and the depth on the outlet side of the fluid is abruptly increased, the generation efficiency of the dynamic pressure is increased.

Furthermore, in the second embodiment, in the case where the thrust bearing movable member 1 is rotated in the direction indicated by the arrow C in Fig. 2A, a dynamic pressure generating groove 3 as shown in Fig. 2B is formed on an inner surface of the thrust bearing movable member 1 serving also as the radial bearing movable member or on a circumferential surface of a stationary shaft (not shown) caused to pass through the inside of the thrust bearing movable member 1.

Then, as shown in Figs. 2C, 2D and 2E, also, the dynamic pressure generating groove 3 is formed into a cross-section so that the dynamic pressure generating groove 3 is gradually deepened on the inlet side of the fluid in the longitudinal direction and the transverse direction of the groove and is abruptly deepened on the outlet side of the fluid in the longitudinal direction and the transverse direction of the groove.

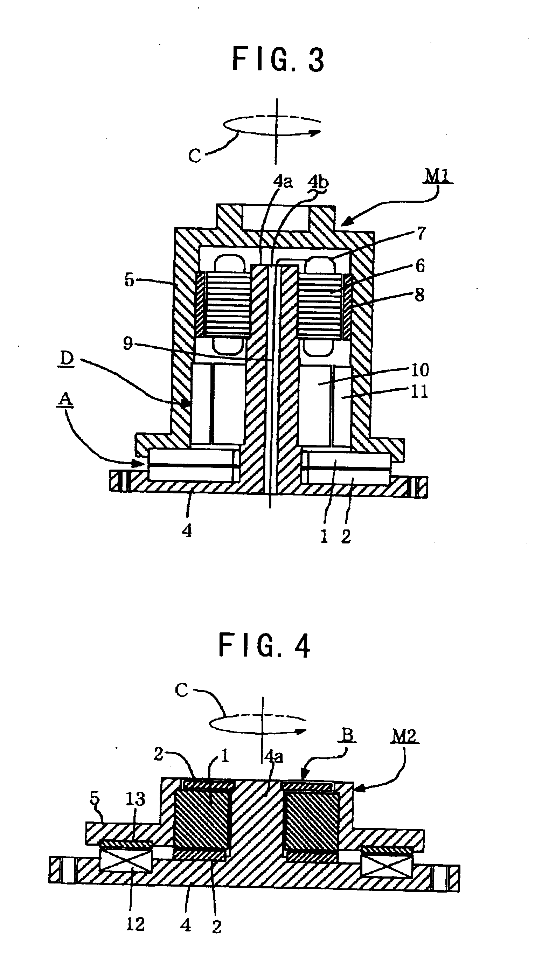

Fig. 3 is a cross-sectional view of a spindle motor using a hydraulic dynamic pressure bearing in accordance with a first embodiment of a second aspect of the invention.

In the spindle motor M1, a stationary shaft 4a is integrally provided in a central portion of a stationary member 4. A cap-shaped rotor 5 is fitted around the stationary shaft 4a. A stator 6, electromagnetic coils 7 and a magnet 8 are provided within the rotor 5. A hole 4b is formed in the stationary shaft 4a. A power supply wire 9 is caused to pass through the hole 4b. An electric power is fed through the power supply wire 9 to the electromagnetic coils 7.

A pneumatic radial bearing D is provided on the lower side of the motor portion, and a hydraulic dynamic pressure bearing A shown in Fig. 1A is provided further on the lower side. In the pneumatic radial bearing D, a radial bearing fixed member 10 is fixed to the stationary shaft 4a, and a radial bearing movable member 11 is fixed to the rotor 5. In the hydraulic dynamic pressure bearing A, a thrust bearing movable member 1 is fixed to a lower surface of the rotor 5, and a thrust bearing fixed member 2 is fixed to an upper surface of the stationary member 4. Since the dynamic pressure generating groove is formed in the hydraulic dynamic pressure bearings as mentioned above, the generation efficiency of the dynamic pressure is high and a high thrust dynamic pressure is generated in comparison with the conventional system. Accordingly, this spindle motor M1 is strong in force against the load, with the result that the reliability of the bearing has been enhanced.

Fig. 4 is a longitudinal view showing a spindle motor using a hydraulic dynamic pressure bearing in accordance with a second embodiment of the second aspect of the invention.

This spindle motor M2 is of a thin type using the hydraulic dynamic pressure bearing B shown in Fig. 2A inside the motor portion. A motor coil 12 is provided on an outer circumferential portion of the stationary member 4, and a magnet 13 is provided at a position facing the motor coil 12 on the outer circumferential portion of the rotor 5.

A thrust bearing movable member 1 also serving as a radial bearing movable member is fixed to an inner portion of the rotor 5. Also, a lower thrust bearing fixed member 2 is fixed to the stationary member 4. Furthermore, an upper thrust bearing fixed member 2 is fixed to the stationary shaft 4a provided on the stationary member 4. Since the generation efficiency of the dynamic pressure of the hydraulic dynamic pressure bearing B is high, a higher thrust dynamic pressure is generated in comparison with the conventional system. Accordingly, this spindle motor M2 is strong in force against the load, with the result that the reliability of the bearing has been enhanced.

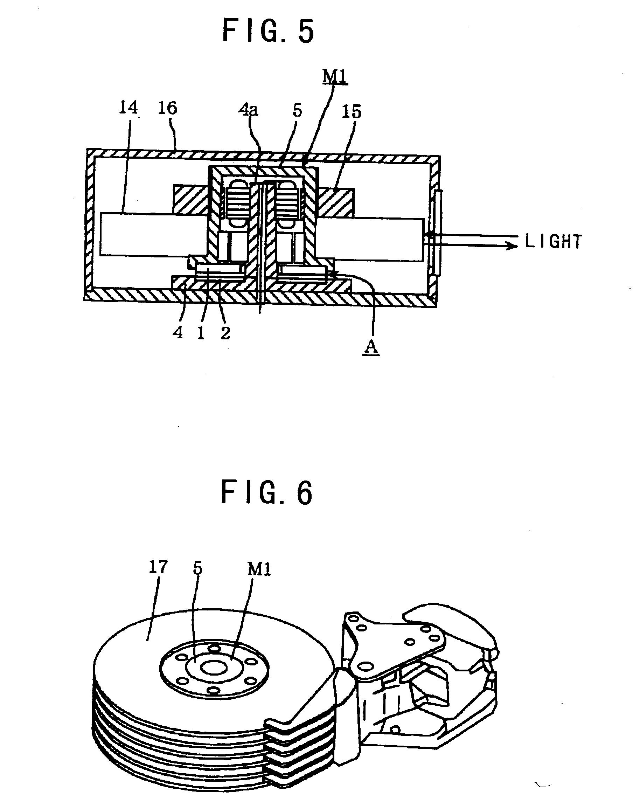

Fig. 5 shows a rotary assembly using a spindle motor in accordance with a first embodiment of a third aspect of the invention. In the rotary assembly, a polygon mirror 14 is fastened and fixed by nuts 15 to the rotor 5 of a spindle motor M1 of the type shown in Fig. 3. The stationary member 4 is fixed to a bottom portion of a mirror case 16. The same reference numerals are used to indicate like members or components as compared with those used in Fig. 3.

Fig. 6 shows a rotary drive unit for an object to be rotated, using a spindle motor in accordance with a second embodiment of the third aspect of the invention. This rotary drive unit is a disc unit in which a rotary disc 17 to be rotated, such as a magnetic disc or an optical disc, is mounted on the rotor 5 of a spindle motor M1 of the type shown in Fig. 3.

As described above, in the hydraulic dynamic pressure bearing according to the first aspect of the invention, the dynamic pressure generating groove is formed into a cross-section so that the groove is gradually deepened on the inlet side of the fluid in the longitudinal direction and the transverse direction of the groove and is abruptly deepened on the outlet side of the fluid in the longitudinal direction and the transverse direction of the groove. Therefore, a higher dynamic pressure generation efficiency is obtained in comparison with the conventional system.

In the spindle motor using the hydraulic dynamic pressure bearing according to the second aspect of the invention, the hydraulic dynamic pressure bearing according to the first aspect of the invention which has a high dynamic pressure generation efficiency is used. In the bearing portion, a higher thrust dynamic pressure than that of the conventional system is generated and a stronger force is obtained against the load. Therefore, it is possible to enhance the reliability of the motor.

In the rotary assembly using the spindle motor according to the third aspect of the invention, it is possible to ensure the effect of the above-described hydraulic dynamic pressuring bearing and the spindle motor and to enhance the reliability and the quality of the rotary assembly.

Various details may be changed without departing from the scope of the invention. Furthermore, the foregoing description of the embodiments according to the present invention is provided for the purpose of illustration only, and not for the purpose of limiting the invention as defined by the appended claims.

## Claims

1. A hydraulic dynamic pressure bearing (A, B) comprising a bearing movable member (1) and a bearing fixed member (2), characterised in that a dynamic pressure generating groove (3) formed in either one of said members (1, 2) is formed with a cross section such that the dynamic pressure generating groove (3) is gradually deepened on a hydraulic inlet side in a radial direction of the dynamic pressure generating groove (3) and on a hydraulic inlet side in a groove transverse direction, and abruptly deepened on an inner end side in the radial direction of the dynamic pressure generating groove (3) and on the side opposite the inlet side in the transverse direction.

2. A spindle motor (M1, M2) in which a spindle (5) is pivoted to a stationary member (4, 4a) through a hydraulic dynamic pressure bearing (A, B), comprising a bearing movable member (1) and a bearing fixed member (2), characterised in that a dynamic pressure generating groove (3) formed in either one of said members (1, 2) is formed with a cross section such that the dynamic pressure generating groove (3) is gradually deepened on a fluid inlet side in a radial direction of the dynamic pressure generating groove (3) and on a fluid inlet side in a groove transverse direction and abruptly deepened on an inner end side in the radial direction of the dynamic pressure generating groove (3) and on the side opposite the inlet side in the transverse direction.

3. A rotary assembly comprising a spindle motor (M1) according to claim 2, characterised in that an object to be rotated (17), is mounted on said spindle (5) of said spindle motor (M1).

4. A hydraulic dynamic pressure bearing (A, B) comprising:
a bearing movable member (1); and
a bearing fixed member (2) for supporting said bearing movable member (1), characterised in that:
a dynamic pressure generating groove (3) is formed on a sliding surface of either one of said bearing movable member (1) and said bearing fixed member (2);
the groove (3) is formed with a cross section such that the depth of the groove (3) is gradually deepened on a side into which fluid is introduced in a longitudinal direction of the dynamic pressure generating groove (3) and on a side into which fluid is introduced in a transverse direction of the dynamic pressure generating groove (3); and
the groove (3) is formed with a cross section such that the depth of the groove (3) is abruptly deepened on a side from which fluid is discharged in the longitudinal direction of the dynamic pressure generating groove (3) and on a side from which fluid is discharged in a transverse direction of the dynamic pressure generating groove (3).

5. A hydraulic dynamic pressure bearing (A) comprising:
a first circular thrust bearing member (2); and
a second circular thrust bearing member (1) provided so as to slide relative to said first thrust bearing member (2), characterised in that:
a dynamic pressure generating groove (3) is formed on a sliding surface of either one of said first thrust bearing member (2) and said second thrust bearing member (1);
the groove (3) is formed with a cross section such that the depth of the groove (3) is gradually deepened on a side into which fluid is introduced in a longitudinal direction of the dynamic pressure generating groove (3) and on a side into which fluid is introduced in a transverse direction of the dynamic pressure generating groove (3); and
the groove (3) is formed with a cross section such that the depth of the groove (3) is abruptly deepened on a side from which fluid is discharged in the longitudinal direction of the dynamic pressure generating groove (3) and on a side from which fluid is discharged in a transverse direction of the dynamic pressure generating groove (3).

6. A hydraulic dynamic pressure bearing (B) comprising:
a column-like first radial bearing member (2); and
a cylindrical second radial bearing member (1) provided so as to slide relative to said first radial bearing member (2), characterised in that
a dynamic pressure generating groove (3) is formed on a sliding surface of either one of said first radial bearing member (2) and said second radial bearing member (1);
the groove (3) is formed with a cross section such that the depth of the groove (3) is gradually deepened on a side into which fluid is introduced in a longitudinal direction of the dynamic pressure generating groove (3) and on a side into which fluid is introduced in a transverse direction of the dynamic pressure generating groove (3); and
the groove (3) is formed with a cross section such that the depth of the groove (3) is abruptly deepened on a side from which fluid is discharged in the longitudinal direction of the dynamic pressure generating groove (3) and on a side from which fluid is discharged in a transverse direction of the dynamic pressure generating groove (3).

7. A spindle motor (M1, M2) comprising:
said hydraulic dynamic pressure bearing (A, B) according to any one of claims 4 to 6; and
a spindle (5) supported by said hydraulic dynamic pressure bearing (A, B).

8. A rotary assembly comprising:
said hydraulic dynamic pressure bearing (A, B) according to any one of claims 4 to 6;
a spindle motor (M1) provided with a spindle (5) supported by said hydraulic dynamic pressure bearing (A, B); and
an object to be rotated (17), fixed to said spindle (5) of said spindle motor (M1).
